# EUROPÄISCHE PATENTSCHRIFT

(11) **EP 2 614 633 B1**
(45) Veröffentlichungstag und Bekanntmachung des Hinweises auf die Patenterteilung: **14.01.2015**
(21) Anmeldenummer: 11752548.5
(22) Anmeldetag: 06.09.2011
(51) Int. Cl.: H04M 1/725, G06F 17/30

(54) **VERFAHREN ZUR EINSTELLUNG EINES FILTERVERHALTENS UND ZUR ANZEIGE EINES FILTERERGEBNISSES AN EINEM MOBILEN ENDGERÄT**
METHOD FOR SETTING A FILTER BEHAVIOUR AND FOR DISPLAYING A FILTER RESULT ON A MOBILE TERMINAL
PROCÉDÉ PERMETTANT D'AJUSTER UN COMPORTEMENT DE FILTRAGE ET D'AFFICHER LE RÉSULTAT D'UN FILTRAGE SUR UN TERMINAL MOBILE

(30) Priorität: 06.09.2010 DE 102010044459
(43) Veröffentlichungstag der Anmeldung: 17.07.2013
(73) Patentinhaber: Deutsche Telekom AG, 53113 Bonn (DE)
(72) Erfinder: SCHULZ, Sebastian, 50825 Köln (DE)
(74) Vertreter: Braun-Dullaeus, Karl-Ulrich
(86) Internationale Anmeldenummer: PCT/EP2011/065359
(87) Internationale Veröffentlichungsnummer: WO 2012/032025

(56) Entgegenhaltungen:
- US-A1- 2009 327 972
- US-A1- 2010 241 965
- Anonymus: "Saved Search", Mozilla Zine , 13. Mai 2010 (2010-05-13), XP002663526, Gefunden im Internet: URL:http://web.archive.org/web/20100513072 744/http://kb.mozillazine.org/Saved_Search [gefunden am 2011-11-14]

## Beschreibung

Die Erfindung betrifft ein mobiles Endgerät zur Einstellung eines Filterverhaltens zur Filterung von Datenbankelementen und zur Anzeige des aus dem Filterverhalten resultierenden Filterergebnisses. Des weiteren betrifft die Erfindung ein Verfahren, womit die Einstellung des Filterverhaltens und die Anzeige des Filterergebnisses am mobilen Endgerät durchgeführt werden.

Bekanntermaßen bieten Mobiltelefone oder Smartphones Möglichkeiten der Durchsuchung bzw. Filterung von Datenbanken nach einfacher Filterung anhand einer einzigen Filterfunktion bzw. Filterkategorie. Bei den derzeitigen Suchfunktionen durchblättert der Nutzer eines Mobiltelefons beispielsweise zur Suche eines Kontakts das Kontaktverzeichnis des Mobiltelefons. Diese Suchfunktion ist jedoch am Mobiltelefon besonders zeitaufwendig. Alternativ wendet der Nutzer eine am Mobiltelefon eingerichtete Filterfunktion an, indem er das Mobiltelefon durch Eingabe eines oder mehrerer Anfangsbuchstaben von Personennamen dazu veranlasst, durch Filterung genau diejenigen Personennamen anzuzeigen, welche die vom Benutzer eingegebenen Anfangsbuchstaben im Namen aufweisen. Auf diese Art und Weise gelangt der Nutzer schnell und komfortabel an die Kontaktdaten der gewünschten Person. Weiterhin besteht bei Mobiltelefonen die Möglichkeit, andersartige Datenbanken, beispielsweise Nachrichtendatenbanken mit Kurznachrichten und/oder E-Mails zu durchforsten und die Filterergebnisse hervorheben zu lassen.

Im Gegensatz zu in anderen Systemen implementierten Suchfunktionen, wie beispielsweise der Suchfunktion im Windows-Explorer, der Google-Suche oder der Outlook-Suchfunktion, erfordert die Implementierung von Suchbzw. Filterfunktionen an mobilen Endgeräten vom Nutzer derzeit noch ein vergleichsweise hohes Maß an Geduld sowie Kenntnis der Funktionen und des größtenteils nicht sichtbaren Menüs des mobilen Endgeräts.

So ist es zeitaufwendig und lästig, Daten einer in einem mobilen Endgerät gespeicherten Datenbank nach Wunsch des Nutzers zu filtern. Derzeit hat der Benutzer hierfür zunächst die Datenbank aufzurufen, daraufhin im Menu das Suchfunktionsprogramm herauszusuchen sowie auszuwählen und aus dem Suchfunktionsprogramm wiederum die gewünschte Filterfunktion zu wählen. Ausserdem sieht sich der Nutzer eines Mobiltelefons derzeit einer unzureichenden Anzahl von Filterfunktionen bzw. Filterkategorien ausgesetzt. Bei Suchfunktionen des Windows-Explorers, der Google-Suche bzw. Outlook-Suche können zwar Filterkategorien aus Kontextmenus ausgewählt oder auch selbst kreiert werden. Hierfür hat der Nutzer des mobilen Endgeräts weder die Zeit noch eine in der Dimensionierung ausreichende Bedienoberfläche am mobilen Endgerät zur Verfügung. Darüber hinaus wird die Bedienoberfläche, welche bei derzeitigen mobilen Endgeräten zumeist auch als Anzeigeoberfläche fungiert, zusätzlich durch die für die Filterergebnisse benötigte Anzeigefläche in ihrer Dimensionierung eingeschränkt.

Demzufolge ist eine Großzahl heutzutage auf dem Markt befindlicher, mobiler Endgeräte mit automatisch eingestellten und aktivierten Filterfunktionen versehen. Hierbei werden beispielsweise eingehende Kurznachrichten je nach Absender automatisch in einem dem Absender zugewiesenen Datenordner abgelegt, sodass der Nutzer des mobilen Endgeräts durch Öffnung des absenderspezifischen Ordners ausschließlich die Kurznachrichten des jeweiligen Absenders einsehen kann. Damit bleibt zwar die Übersichtlichkeit auf der Anzeige des mobilen Endgerätes vorhanden, jedoch sind die Möglichkeiten einer nutzerspezifischen Filterung von Datenbanken an heutigen mobilen Endgeräten im Vergleich zur Masse an Daten völlig unzureichend, welche der Nutzer auf dem mobilen Endgerät speichert bzw. über das Endgerät abruft.

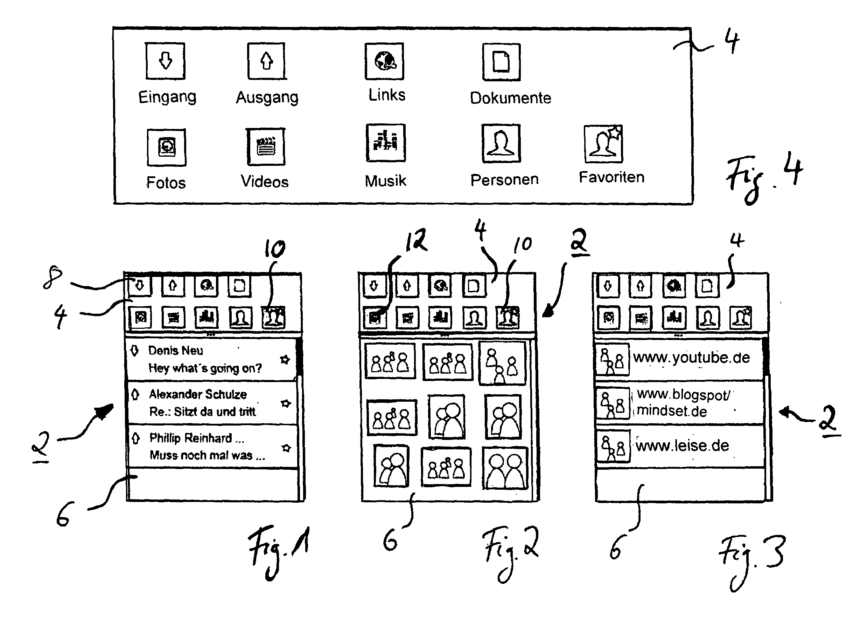

Die US 2009/327972 A1 offenbart ein hierarchisch strukturiertes Anzeigekonzept. In Figur 4 wird eine großflächige Benutzeroberfläche eines Emailverwaltungsprogramms, ähnlich dem Mozilla Thunderbird, gezeigt. Mit dem Betätigen eines Filtersymbols wird grundsätzlich eine Filterfunktionalität eingeschaltet.

Aufgabe der Erfindung ist es somit, ein Verfahren zur Verfügung zu stellen, womit der Nutzer die Einsteilung eines Filterverhaltens und die Einsichtnahme eines aus dem Filterverhalten resultierenden Filterergebnisses besonders komfortabel, zeiteffizient und in Bezug auf den Typ des mobilen Endgeräts besonders handhabungsfreundlich durchführen kann.

Gelöst wird die Aufgabe durch das Verfahren mit den Merkmalen des Anspruchs 1. Danach weist das erfindungsgemäße mobile Endgerät eine Anzeige- und Eingabeeinrichtung auf, welche als berührungsempfindlicher Bildschirm oder als sogenannter Touchscreen ausgebildet ist und zur Filterung von Datenbankelementen ein Suchfenster und ein Ergebnisfenster anzeigt. Das Suchfenster dient zur Einstellung eines Filterverhaltens, um Datenbankelemente zu filtern, wobei das Filterverhalten durch eine oder mehrere Filterfunktionen gekennzeichnet ist. Jede Filterfunktion ist durch ein Symbolbild im Suchfenster visualisiert. Zur Einstellung des Filterverhaltens werden eine oder mehrere Filterfunktionen oder eine Kombination von Filterfunktionen durch Betätigung des oder der entsprechenden Symbolbilder durch den Benutzer ausgewählt. Im Ergebnisfenster der Eingabe und Anzeigeeinrichtung kommt das aus dem Filterverhalten resultierende Filterergebnis zur Anzeige.

Die mit der Erfindung erzielten Vorteile bestehen insbesondere darin, eine besonders komfortable und bedienerfreundliche Auswahl von Filterfunktionen bzw. Filterkategorien an der Anzeige- und Eingabeeinrichtung zu ermöglichen. Die Filterfunktionen können durch Betätigen der entsprechenden Symbolbilder (Icons), wie es am Touchscreen üblich ist, ausgewählt werden. Des weiteren stellt die Visualisierung der Filter mittels Icons auf der Eingabe und Anzeigeeinrichtung eine besonders übersichtliche Darstellung der Filterfunktionen im Suchfenster dar, sodass der Nutzer jederzeit Überblick über die gewählten Filterkategorien behält. Die Visualisierung der Filterkategorien im Suchfenster ist besonders bei Einstellung eines Filterverhaltens, welches eine Kombination von Filterkategorien aufweist, von Vorteil. Außerdem ist die Handhabung zur Wahl der Filterfunktion im Suchfensters im Gegensatz zu unübersichtlichen und - wenn sich das mobile Endgerät in Bewegung befindet - vergleichsweise schwierig zu bedienbaren Kontextmenus besonders einfach. Darüber hinaus bildet sich aus der Unterteilung der Anzeige- und Eingabeeinrichtung in ein Suchfenster und ein Ergebnisfenster der Vorteil heraus, dass der Nutzer zusätzlich zu den angezeigten Filterergebnissen auch die gewählten und andere verfügbare Filterfunktionen sehen kann, wohingegen er bei einer über ein Kontextmenu einstellbaren Suchfunktion die Einstellung des Filterverhaltens nicht zeitgleich zur Anzeige der Filterergebnisse sehen kann, da das Kontextmenü vergleichsweise viel Platz auf der Anzeigeeinrichtung benötigt, und bei Einsichtnahme der Filterergebnisse nicht zeitgleich Änderungen am Filterverhalten vornehmen kann.

Vorteilhafte Weiterbildungen der Erfindungen ergeben sich aus den Unteransprüchen.

In zweckmäßiger Weiterbildung werden im Suchfenster genau diejenigen Filterfunktionen bzw. Filterkategorien angezeigt, welche für Datenbankelemente einer Datenbank in Frage kommen. Beispielsweise sind für eine Datenbank zur Speicherung von E-Mails Filterfunktionen spezifisch, wonach ausgehende oder eingehende E-Mails, E-Mails mit Anhängen und/oder E-Mails von bzw. an bestimmte Personen gefiltert werden. Im Vergleich dazu sind für eine Multimedia-Datenbank Filterfunktionen spezifisch, womit Fotos, Videos und/oder Musik gefiltert werden können.

Zweckmäßigerweise sind auch Filterfunktionen, wie Dateitypenfilter, Webseitenverknüpfungsfilter oder Linkfilter, separat und auch in Kombination - miteinander verknüpft - wählbar.

Um eine übersichtliche und einfache Darstellung der Filterergebnisse im Ergebnisfenster zu erreichen, ist es zweckmäßig, die gefilterten Datenbankelemente in einer Listendarstellung und/oder in Galerieansicht darzustellen.

Des weiteren ist es zweckmäßig, im Suchfenster zu erkennen, welche Filterfunktionen gewählt sind und welches Filterverhalten eingestellt ist. Hierzu ist die Anzeige- und Eingabeeinrichtung zweckmäßigerweise derart ausgebildet, dass sich mit der Wahl einer Filterfunktion durch Betätigung des entsprechenden Symbolbilds die Visualisierung bzw. Darstellung dieses Symbolbilds, beispielsweise durch Wechsel des Farbtons oder der Farbe, ändert.

Um dem Nutzer des mobilen Endgerätes zu ermöglichen, das Filterverhalten nicht nur zügig einzustellen, sondern auch zu verändern oder rückgängig zu machen bzw. auch in seinen Anfangszustand zurückzusetzen, ist es zweckmäßig, im Suchfenster eine Funktion vorzusehen, womit das Filterverhalten entsprechend eingestellt werden kann, beispielsweise um eine oder mehrere Filterfunktionen abwählen bzw. deaktivieren zu können. Zur Änderung des Filterverhaltens ist es auch zweckmäßig, im Suchfenster ein der Filterfunktion zugewiesenes, betätigbares Symbolbild bzw. Icon vorzusehen. In zweckmäßiger Weiterbildung ist die Änderung des Filterverhaltens, konkretisiert auf den Fall der Abwahl einer oder mehrerer Filterfunktionen, durch Betätigung der die entsprechenden Filterfunktionen kennzeichnenden Symbolbilder durchführbar. So kann der Benutzer beispielsweise eine durch Betätigung des Symbolbilds gewählte Filterfunktion durch wiederholte Betätigung des selben Symbolbilds ganz einfach wieder abwählen bzw. deaktivieren.

In zweckmäßiger Weise können auch Datenbankelemente von Datenbanken gefiltert werden, welche nicht oder nicht vollständig auf dem Endgerät gespeichert sind, sondern teilweise auf dem Endgerät und teilweise im Internet oder vollständig im Internet hinterlegt sind.

Nachfolgend wird ein Ausführungsbeispiel der Erfindung anhand einer Zeichnung näher erläutert.

Darin zeigen:
Figuren 1-3 in schematischer Darstellung die Anzeige- und Eingabeeinrichtung eines mobilen Endgeräts mit Suchfenster und Ergebnisfenster und Figur 4 in schematischer Darstellung ein Suchfenster mit mehreren durch Symbolbilder gekennzeichneten Filterfunktionen.

Einander entsprechende Teile sind in allen Figuren mit den gleichen Bezugszeichen versehen.

Figur 1 zeigt in schematischer Darstellung eine Anzeige- und Eingabevorrichtung 2 eines mobilen Endgeräts, welche im vorliegenden Ausführungsbeispiel als berührungsempfindlicher Bildschirm bzw. Touchscreen ausgebildet ist und ein Suchfenster 4 sowie ein Ergebnisfenster 6 anzeigt. Das Suchfenster 4 umfasst mehrere Symbolbilder 8, 10, welche über den Touchscreen betätigbar sind. Im vorliegenden Ausführungsbeispiel ist das Filterverhalten auf die Filterkategorie bzw. die Filterfunktion zur Filterung von Favoriten eingestellt, sodass die gewählte Filterfunktion "Favoriten", welche durch das Symbolbild 10 gekennzeichnet ist, im Suchfenster durch den im unterschiedlichen Grauton des Symbolbilds 10 und von den anderen Symbolbildern 8 unterscheidbar sind. Die Filterergebnisse sind im Ergebnisfenster 6 untereinander aufgelistet.

Figur 2 zeigt in schematischer Darstellung ebenso eine Anzeige- und Eingabevorrichtung 2 mit einem Suchfenster 4 und einem Ergebnisfenster 6. Im Gegensatz zum Ausführungsbeispiel von Figur 1 weist das Suchfenster 4 des Ausführungsbeispiels von Figur 2 ein Filterverhalten mit einer Kombination von Filterfunktionen auf. Die Kombination der gewählten Filterfunktionen ist an den Graufärbungen des Symbolbilds 10 für die Filterfunktion "Favoriten" und des Symbolbilds 12 für die Filterfunktion "Fotos" erkennbar. Das Ergebnisfenster 6 zeigt das Filterergebnis in Galerieansicht. Die Darstellung als Galerieansicht ist bei einer Fotos umfassenden Datenbank zur Verbesserung der Übersichtlichkeit von auf einem mobilen Endgerät dargestellten Informationen besonders sinnvoll.

Figur 3 zeigt wie Figur 1 ein Ausführungsbeispiel mit der Anzeige- und Eingabeeinrichtung 2 mit dem Suchfenster 4 und dem Ergebnisfenster 6. Im Gegensatz zu den vorhergehenden Ausführungsbeispielen ist die Suchfunktion im Ausführungsbeispiel von Figur 3 auf die Filterkategorie zur Filterung von Datenbankelementen einer Datenbank eingestellt, welche Webseitenverknüpfungen bzw. Webseitenlinks umfasst, deren Filterergebnis im Ergebnisfenster 6 aufgelistet ist.

Figur 4 zeigt in schematischer Darstellung ein Suchfenster 4, welches anhand der Anzeige- und Eingabeeinrichtung (nicht gezeigt) angezeigt ist und worüber das Filterverhalten durch Betätigung der entsprechenden durch Symbolbilder gekennzeichneten Filterfunktionen einstellbar ist. Im vorliegenden Ausführungsbeispiel werden im Suchfenster 4 Symbolbilder für mehrere Filterfunktionen angezeigt. Unter anderem sind die Filterfunktionen "Ingoing" und "Outgoing", deren Symbolbilder mit entgegengerichteten Pfeilen gekennzeichnet sind, zur Filterung von beispielsweise ein- bzw. ausgehenden Nachrichten aus einer Nachrichten umfassenden Datenbank dargestellt. Des weiteren sind in Figur 4 Symbolbilder mit Filterfunktionen zur Filterung von Webseitenverknüpfungen, Dokumenten, Fotos, Videos, Musikdateien, Personen als auch von als Favoriten gekennzeichneten Datenbankelementen gezeigt.

## Patentansprüche

1. Verfahren zur Einstellung eines Filterverhaltens zur Filterung von Datenbankelementen durch Betätigung von Filterfunktionen kennzeichnenden Symbolbildern (8,10,12), um eine Kombination der Filterfunktionen auszuwählen, und zur Anzeige des aus dem Filterverhalten resultierenden Filterergebnisses an einem Mobiltelefon oder Smartphone, umfassend
eine als berührungsempfindlicher Bildschirm ausgebildeten Anzeige- und Eingabeeinrichtung (2), welche ein Suchfenster (4) zur Einstellung eines Filterverhaltens zur Filterung von Datenbankelementen durch Betätigung von im Suchfenster (4) angezeigten Symbolbildern (8,10,12),
und ein Ergebnisfenster (6) zur Anzeige des aus dem Filterverhalten resultierenden Filterergebnisses,
**dadurch gekennzeichnet,**
**dass** jeweils ein Symbolbild (8,10,12) eine der Filterfunktionen kennzeichnet, und dass eine Kombination von Filterfunktionen durch Betätigung der entsprechenden Symbolbilder durch den Nutzer ausgewählt wird.

2. Verfahren nach Anspruch 1,
**gekennzeichnet durch**
eine Datenbankelemente spezifische Anzeige der einen oder mehreren Filterfunktionen mittels des bzw. der entsprechenden Symbolbilder (8,10,12) im Suchfenster (4).

3. Verfahren nach Anspruch 1 oder 2,
**dadurch gekennzeichnet,**
**dass** jede Filterfunktion einen Filter, insbesondere Personen-, Dateitypen-, Daten und/oder Webseitenverknüpfungsfilter, umfasst.

4. Verfahren nach einem der vorhergehenden Ansprüche,
**dadurch gekennzeichnet,**
**dass** die Anzeige- und Eingabeeinrichtung (2) das Filterergebnis als Listendarstellung der Datenbankelemente und/oder Galeriedarstellung der Datenbankelemente anzeigt.

5. Verfahren nach einem der vorhergehenden Ansprüche,
**dadurch gekennzeichnet,**
**dass** die Darstellung eines oder mehrere der Symbolbilder (8,10,12) durch Betätigung des bzw. der entsprechenden Symbolbilder (8,10,12) geändert wird.

6. Verfahren nach einem der vorhergehenden Ansprüche,
**dadurch gekennzeichnet,**
**dass** eine Funktion zur Änderung des Filterverhaltens, insbesondere zur Abwahl einer oder mehrerer der Filterfunktionen, im Suchfenster angezeigt wird.

7. Verfahren nach Anspruch 6,
**dadurch gekennzeichnet,**
**dass** die Funktion zur Änderung des Filterverhaltens durch Betätigung eines dafür im Suchfenster (4) separat vorgesehenen oder eines einer oder mehrerer der Filterfunktionen zugewiesenen Symbolbilds wählbar ist.

8. Verfahren nach einem der vorhergehenden Ansprüche,
**dadurch gekennzeichnet,**
**dass** die Datenbankelemente auf einer auf dem Endgerät und/oder im World Wide Web hinterlegten Datenbank hinterlegt sind.

## Claims

1. Method for setting a filter behaviour for filtering database items by actuation of icon images (8,10,12), which characterize filter functions, to select a combination of the filter functions, and to display filter results, which result from the filter behaviour, on a mobile phone or smartphone, comprising
a display designed as a touch-sensitive screen- and input device (2), which has a search window (4) to set a filter behaviour for filtering of database items by actuation of icon images (8,10,12) displayed in the search window (4),
and a results window (6) for displaying the filtering result resulting from the filter behaviour,
**characterized in**
**that** each icon image (8,10,12) characterizes a filter function and that a combination of filter functions is selected by actuation of the respective icon images by the user.

2. Method according to claim 1,
**characterized by**
a database item specific display of one or more filter functions by means of the corresponding icon images (8,10,12) in the search window (4).

3. Method according to claim 1 or 2,
**characterized in**
**that** each filter function comprise one or more filter, in particular persons-, file type-, data- and/or website link filter.

4. Method according to one of the preceding claims,
**characterized in**
**that** the display- and input device (2) displays the filter results as a list view of the database items and/or as a gallery representation of the database items.

5. Method according to one of the preceding claims,
**characterized in**
**that** the display- and input device (2) is adapted to change the representation of one or more of the icon images (8,10,12) by pressing the corresponding icon image or images (8,10,12).

6. Method according to one of the preceding claims,
**characterized in**
**that** a function to change the filter behaviour, in particular to deselect one or more of the filter functions, is displayed in the search window.

7. Method according to claim 6,
**characterized in**
**that** the function to change the filter behaviour is selected by actuating an icon image, which is separately provided therefore in the search window (4) or which is assigned for one or more of the filter functions.

8. Method according to one of the preceding claims,
**characterized in**
**that** the database items are stored on the mobile device and/or a database stored the World Wide Web.

## Revendications

1. Procédé pour le réglage d'un comportement de filtrage pour filtrer des éléments de base de données en actionnant des icônes (8, 10, 12) caractérisant des fonctions de filtrage afin de sélectionner une combinaison de fonctions de filtrage, et pour l'affichage du résultat de filtrage résultant du comportement de filtrage sur un téléphone portable ou un Smartphone, comprenant :
un dispositif d'affichage et de saisie (2) réalisé en tant qu'écran sensible au contact, lequel comprend une fenêtre de recherche (4) pour le réglage d'un comportement de filtrage pour le filtrage d'éléments de base de données grâce à l'actionnement d'icônes (8, 10, 12) affichées sur la fenêtre de recherche (4),
et une fenêtre de résultat (6) pour l'affichage du résultat de filtrage résultant du comportement de filtrage,
**caractérisé en ce que**
respectivement une icône (8, 10, 12) caractérise l'une des fonctions de filtrage, et **en ce qu'**une combinaison de fonctions de filtrage est sélectionnée par l'utilisateur par actionnement des icônes correspondantes.

2. Procédé selon la revendication 1,
**caractérisé par**
un affichage spécifique aux éléments de base de données de l'une ou plusieurs des fonctions de filtrage à l'aide de la, ou des icône(s) (8, 10, 12) correspondante(s) dans la fenêtre de recherche (4).

3. Procédé selon la revendication 1 ou 2,
**caractérisé en ce**
**que** chaque fonction de filtrage comprend un filtre, en particulier un filtre de rattachement de personnes, de types de données, de données et/ou de pages web.

4. Procédé selon l'une des revendications précédentes,
**caractérisé en ce**
**que** le dispositif d'affichage et de saisie (2) affiche le résultat de filtrage en tant que représentation sous forme de liste des éléments de base de données et/ou en tant que représentation sous forme de galerie des éléments de base de données.

5. Procédé selon l'une des revendications précédentes,
**caractérisé en ce**
**que** la représentation d'une ou plusieurs des icônes (8, 10, 12) est modifiée par actionnement de la, ou des icône(s) (8, 10, 12) correspondante(s).

6. Procédé selon l'une des revendications précédentes,
**caractérisé en ce**
**qu'**une fonction pour la modification du comportement de filtrage, en particulier pour la désélection d'une ou plusieurs fonctions de filtrage, est affichée dans la fenêtre de recherche.

7. Procédé selon la revendication 6,
**caractérisé en ce**
**que** la fonction pour la modification du comportement de filtrage peut être sélectionnée par actionnement d'une icône prévue séparément à cet effet dans la fenêtre de recherche (4) ou d'une icône associée à une ou plusieurs des fonctions de filtrage.

8. Procédé selon l'une des revendications précédentes,
**caractérisé en ce**
**que** les éléments de base de données sont enregistrés dans une base de données enregistrée sur l'appareil terminal et/ou le World Wide Web.
